# EUROPEAN PATENT SPECIFICATION

(11) **EP 3 575 026 B1**
(45) Date of publication and mention of the grant of the patent: **09.12.2026**
(21) Application number: 19172176.0
(22) Date of filing: 02.05.2019
(51) Int. Cl.: B23K 9/095, B23K 9/09, B23K 31/12

(54) **WELDING STATE DETERMINATION DEVICE, WELDING STATE DETERMINATION METHOD, AND PROGRAM**
SCHWEISSZUSTANDSBESTIMMUNGSVORRICHTUNG, SCHWEISSZUSTANDSBESTIMMUNGSVERFAHREN UND PROGRAMM
DISPOSITIF DE DÉTERMINATION D'ÉTAT DE SOUDAGE, PROCÉDÉ DE DÉTERMINATION D'ÉTAT DE SOUDAGE ET PROGRAMME

(30) Priority: 28.05.2018 JP 2018101718
(43) Date of publication of application: 04.12.2019
(73) Proprietor: Kabushiki Kaisha Kobe Seiko Sho (Kobe Steel, Ltd.), Kobe-shi, Hyogo 651-8585 (JP)
(72) Inventor: ONE, Tsutomu, Kobe-shi,, Hyogo 651-2271 (JP); HIDAKA, Kazuki, Fujisawa-shi,, Kanagawa 251-8551 (JP); FUJII, Tatsuya, Kobe-shi,, Hyogo 651-2271 (JP)
(74) Representative: TBK

(56) References cited:
- EP-A2- 1 413 381
- JP-A- 2015 013 313
- JP-B2- 3 795 165
- US-A1- 2012 248 081
- US-A1- 2014 367 370
- US-A1- 2015 100 534
- US-A1- 2017 032 281

## Description

This application claims priority of Japanese Patent Application No. : 2018-101718 filed on May 28, 2018.

### BACKGROUND OF THE INVENTION

### Field of the Invention

The present invention relates to a welding state determination device, a welding state determination method, and a program.

### Description of Related Art

JP-A-10-235490 A discloses a method in which a power spectrum, through frequency analysis, of at least one of a welding current, a welding voltage, or a welding arc sound is previously determined in each of a normal state and an abnormal state of the welding, thereby causing a neural network to learn distinction between the normality and abnormality of each power spectrum. In the method, by using the neural network which has leaned the distinction, an actual power spectrum of at least one of the welding current, the welding voltage, or the welding arc sound during welding is evaluated, thereby determining either the normality or abnormality of the power spectrum, and simultaneously determining whether the welding state is an abnormal state or not.
Further prior art can be found in document US 2017 / 032 281 A1 (basis for the preamble of claims 1 and 3) describing weld production knowledge system for processing welding data collected from one of a plurality of welding systems, in document JP 2015 - 013 313 A describing an abnormality monitoring device of an automatic welding machine, in document US 2012 / 248 081 A1 describing a welding system or an enterprise using welding systems, which can communicate with cloud-based resources for the provision of services and products to facilitate the welding operations, in document US 2014 / 367 370 A1 describing a method of operating a welding system, which includes supplying a weld current and a weld voltage to an electrode via a plurality of pulse periods as well as in document EP 1 413 381 A2 describing an electric arc welder, which performs a given weld process with a selected current waveform performed between electrode and workpiece. US 2015/100534 A1 relates to state diagnosing method and apparatus for diagnosing a state of operation based on waveform data.

### SUMMARY OF THE INVENTION

However, the method disclosed in the above-mentioned patent document is difficult to achieve because it needs to prepare lots of data regarding abnormal patterns in advance on various welding conditions through experiments that reproduce the abnormal patterns.

The present invention has been made in view of the above-mentioned problems, and it is a main object of the present invention to provide a welding state determination device, a welding state determination method, and a program which can easily determine the welding state.

To solve the above-mentioned problems, according to the invention there is provided a welding state determination device according to claim 1. Furthermore, according to the invention there is provided a welding state determination method according to a further independent claim. Even more, according to the invention there is provided a program for a computer according to a further independent claim. Advantageous modifications of these are defined in the dependent claims.

According to the present invention, the welding state can be easily determined.

### BRIEF DESCRIPTION OF THE DRAWINGS

FIG. 1 is a block diagram showing a configuration example of a system including a welding state determination device according to an embodiment.
FIG. 2 is a block diagram showing an example of a functional configuration of the welding state determination device.
FIG. 3 is a flowchart showing an example of a procedure for a normal pattern creation process executed by the welding state determination device.
FIG. 4 is a flowchart showing an example of a procedure for a welding state determination process executed by the welding state determination device.
FIG. 5A is a diagram showing an example of a pulse waveform.
FIG. 5B is a diagram showing an example of a pulse waveform.
FIG. 6A is a diagram showing an example of a pulse waveform before shaping.
FIG. 6B is a diagram showing an example of a pulse waveform before shaping.
FIG. 7A is a diagram showing an example of a pulse waveform after the shaping.
FIG. 7B is a diagram showing an example of a pulse waveform after the shaping.
FIG. 8 is a diagram showing an example of a variance of a principal component.
FIG. 9A is a diagram showing an example of a calculation result of the degree of abnormality.
FIG. 9B is a diagram showing an example of a calculation result of the degree of abnormality.
FIG. 10 is a diagram showing an example of a calculation result of a center-of-gravity vector of each cluster.
FIG. 11A is a diagram showing an example of a calculation result of clusters to which the pulse waveforms belong.
FIG. 11B is a diagram showing an example of a calculation result of clusters to which the pulse waveforms belong.
FIG. 12 is a diagram showing an example of a pulse waveform.
FIG. 13 is a diagram showing an example of a pulse waveform.
FIG. 14A is a diagram showing an example of an estimated result of a probability current density.
FIG. 14B is a diagram showing an example of an estimated result of a probability current density.
FIG. 15 is a diagram showing an example of a variance of a principal component.
FIG. 16A is a diagram showing an example of a calculation result of the degree of abnormality.
FIG. 16B is a diagram showing an example of a calculation result of the degree of abnormality.
FIG. 17 is a diagram showing an example of a pulse waveform.
FIG. 18 is a diagram showing an example of sample points at a predetermined position.
FIG. 19A is a diagram showing an example of a calculation result of the degree of abnormality.
FIG. 19B is a diagram showing an example of a calculation result of the degree of abnormality.

### DETAILED DESCRIPTION OF THE INVENTION

Preferred embodiments of the present invention will be described below with reference to the accompanying drawings. The following respective embodiments are illustrative only to exemplify a method and device for implementing the technical idea of the present invention, and the technical idea of the present invention is not limited to the following. Various modifications can be made to the technical idea of the present invention within the scope of the accompanied claims.

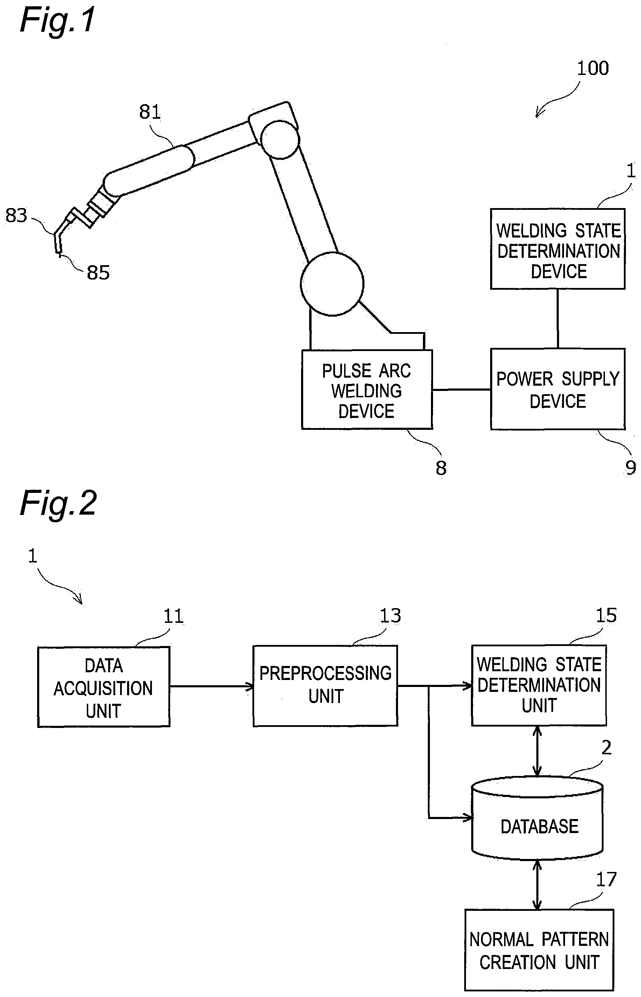

FIG. 1 is a block diagram showing a configuration example of a welding system 100 including a welding state determination device 1 according to an embodiment. The welding system 100 includes a pulse arc welding device 8, a power supply device 9, and the welding state determination device 1.

The pulse arc welding device 8 includes a welding torch 83 that is supported by a robot arm 81. The welding torch 83 has an electrode 85 for generating an arc and implements arc welding, such as, for example, Metal Inert Gas (MIG) welding or Metal Active Gas (MAG) welding.

The pulse arc welding device 8 implements pulse arc welding with a pulse current and a pulse voltage supplied from the power supply device 9. The power supply device 9 includes an ammeter or a voltmeter and outputs a detected signal of a pulse current or a pulse voltage to the welding state determination device 1.

The welding state determination device 1 is a computer that includes a CPU, a RAM, a ROM, a nonvolatile memory, an input/output interface, and the like. The CPU executes information processing in accordance with a program loaded from the ROM or nonvolatile memory into the RAM. The program may be supplied via an information storage medium, such as an optical disk or a memory card, or for example, may be supplied via a communication network, such as the Internet.

FIG. 2 is a block diagram showing an example of a functional configuration of the welding state determination device 1. The welding state determination device 1 includes a data acquisition unit 11, a preprocessing unit 13, a welding state determination unit 15, and a normal pattern creation unit 17. These functional units are implemented by causing the CPU of the welding state determination device 1 to execute the information processing in accordance with the program. The database 2 may be provided inside or outside the welding state determination device 1.

The data acquisition unit 11 is an example of an acquisition unit, the preprocessing unit 13 is an example of a preprocessing unit, the welding state determination unit 15 is an example of a determination unit, and the normal pattern creation unit 17 is an example of a creation unit.

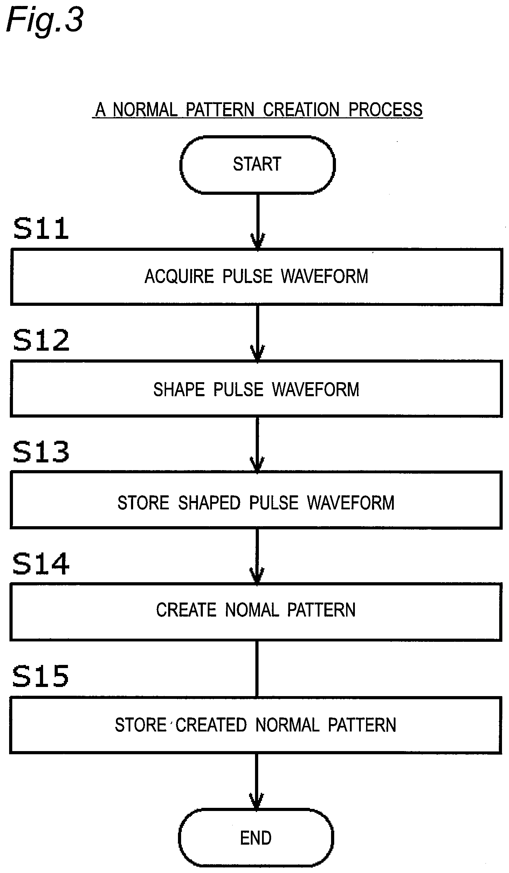

FIG. 3 is a flowchart showing an example of a procedure for a normal pattern creation process executed by the CPU of the welding state determination device 1. This normal pattern creation process is a process executed so as to previously create a normal pattern for use in the welding state determination process to be mentioned later.

First, the CPU acquires a pulse waveform from a detected signal of a pulse current or a pulse voltage supplied from the power supply device 9 to the pulse arc welding device 8 (S11, process as the data acquisition unit 11). The pulse waveform is cut out in units, each unit including a falling portion, a rising portion, and a flat portion therebetween. The flat portion may be a base portion or a peak portion.

Then, the CPU shapes the pulse waveform such that the flat portion thereof has a predetermined width (S12, process as the preprocessing unit 13), and stores the shaped pulse waveform in the database 2 (S13). The width of the flat portion of the pulse waveform may vary depending on welding conditions, power supply control, and the like. Due to this, the widths of the flat portions of the pulse waveforms are equalized in order to facilitate comparison between the pulse waveforms.

Then, the CPU creates a normal pattern based on the plurality of shaped pulse waveforms stored in the database 2 (S14, process as the normal pattern creation unit 17) and stores the normal pattern in the database 2 (S15) . It is not necessary to prepare a lot of abnormal pulse waveforms, the number of which is smaller than that of the normal pulse waveforms, because the normal pattern is created in the present embodiment.

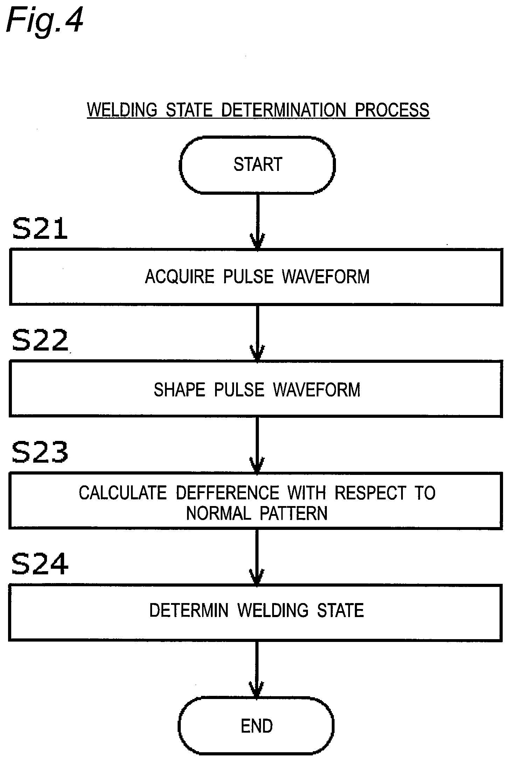

FIG. 4 is a flowchart showing an example of a procedure for the welding state determination process executed by the CPU of the welding state determination device 1. This welding state determination process is a process executed so as to determine the welding state during welding or the like by the pulse arc welding device 8.

First, the CPU acquires a pulse waveform from a detected signal of the pulse current or the pulse voltage supplied from the power supply device 9 to the pulse arc welding device 8 (S21, process as the data acquisition unit 11). Here, the pulse waveform is cut out in the same unit as that in the normal pattern creation process of S11 shown in FIG. 3 mentioned above.

Then, the CPU shapes the pulse waveform such that the flat portion thereof has a predetermined width (S22, process as the preprocessing unit 13). Here, the pulse waveform is shaped such that the flat portion thereof has substantially the same width as the flat portion in the normal pattern creation process of S12 shown in FIG. 3.

Then, the CPU reads out the normal pattern stored in the database 2 and calculates a difference between the normal pattern and the pulse waveform shaped in S22 which is an immediately preceding step (S23). Subsequently, the CPU determines the welding state based on the calculated difference (S24, process as the welding state determination unit 15). The present embodiment utilizes the normal pattern and thus can easily determine the welding state.

More specific examples of the normal pattern creation process and the welding state determination process will be described below.

### [Shaping of Pulse Waveform]

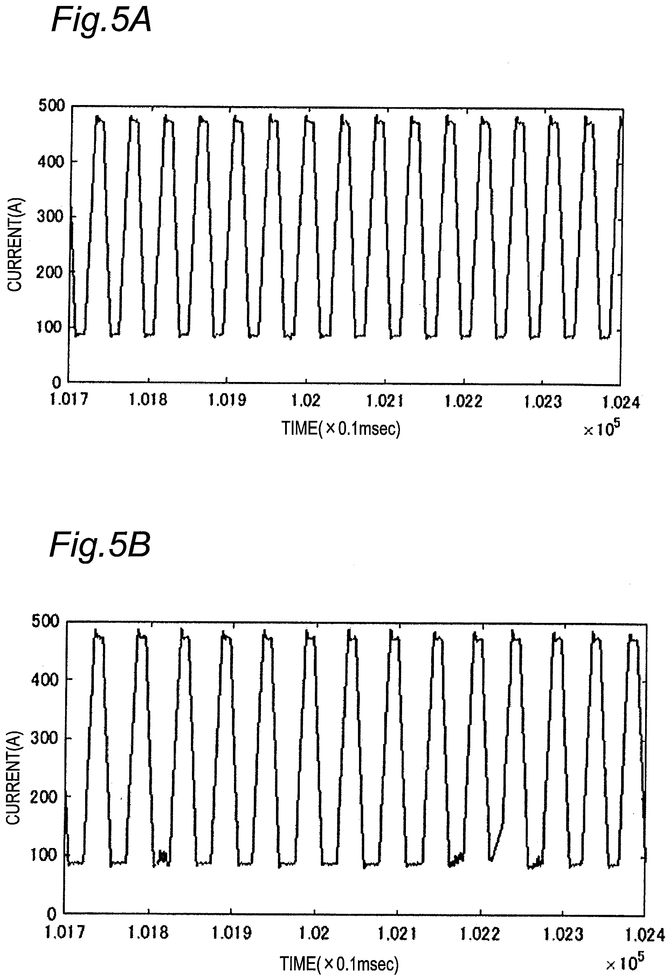

A method of detecting abnormality of a pulse waveform will be described which involves preprocessing a pulse waveform to shape it into a scaled waveform and then conducting pattern matching thereon. FIG. 5A is a diagram showing an example of a normal pulse waveform. FIG. 5B is a diagram showing an example of an abnormal pulse waveform. In this example, disturbance occurs in the base portion of the pulse waveform.

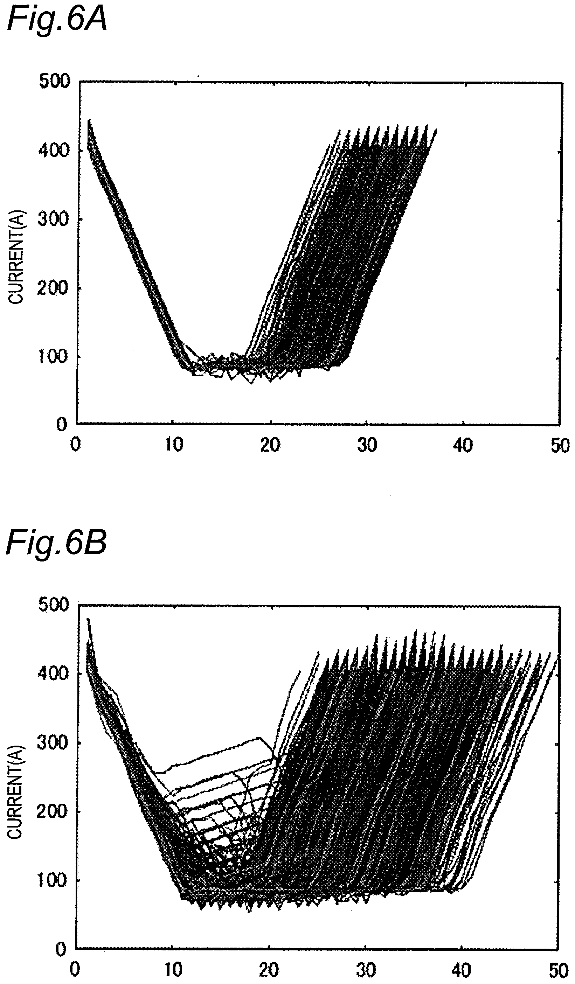

Here, the pulse waveform is proposed to be cut out for each pulse. FIG. 6A is a diagram showing the result obtained by, for example, cutting out the normal pulse waveform into a plurality of pulses, each pulse being present within a range from its rising portion with approximately 400 A to a next rising portion with approximately 400 A, and then by superimposing the plurality of pulses on each other. Meanwhile, FIG. 6B is a diagram showing the result obtained by cutting out the abnormal pulse waveform that has disturbance in its base portion, into a plurality of pulses, each pulse being within the same range as above, and then by superimposing the plurality of pulses on each other. The cutting out of the pulse waveform corresponds to the above-mentioned data acquisition unit 11, and S11 and S21.

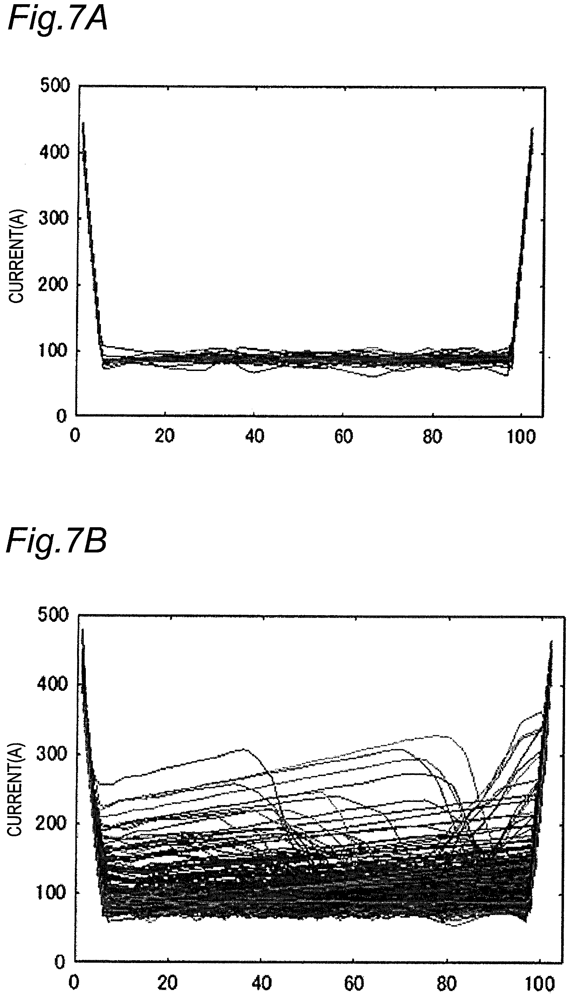

In either case, another waveform with a different pulse width from its original waveform is mixed in the original waveform due to the influence of control on a power supply device side regarding the pulse width. This makes it difficult to extract the disturbance from the respective pulse waveforms. For this reason, as shown in FIGS. 7A and 7B, a process is performed to match the widths of the pulse waveforms. That is, the rough shapes of the pulse waveforms are matched with each other by causing a falling portion and a rising portion of one pulse waveform, each portion having a steep gradient, to coincide with a falling portion and a rising portion of the other pulse waveform, respectively, and then widening a flat portion with a gentle gradient of each pulse waveform.

Specifically, after taking a moving average at several points of the pulse waveform, a difference in the value between the adjacent sample points is determined to thereby calculate a gradient there, and subsequently, the process is conducted to widen a portion of the pulse waveform that has an absolute value of the gradient of a predetermined value or less. When widening the portion, a process is performed to conduct linear interpolation between the sample points. Thereafter, only by widening the flat portion with the gentle gradient, the pulse waveforms may not be strictly matched in terms of the number of sample points in the lateral width of the pulse waveform when including the falling portion and rising portion with the steep gradients. Due to this, the process is performed to adjust the entire width of each pulse waveform to approximately 100 points, while the pulse waveform includes the falling portion with the steel gradient, the widened flat portion (base portion) with the gentle gradient, and the rising portion with the steep gradient.

FIG. 7A is a diagram showing a calculation result obtained by performing the above-mentioned interpolation process on the normal pulse waveform and then performing another interpolation thereon to further extend the whole of the normal pulse waveform to several thousands to several tens of thousands of points, followed by thinning out the entire pulse waveform to approximately 100 points. Meanwhile, FIG. 7B is a diagram showing a calculation result obtained by performing the above-mentioned process on the abnormal pulse waveform that has disturbance in the base portion thereof. According to these figures, the difference between the normal pulse waveform and the abnormal waveform is found to be emphasized. The above-mentioned shaping of the pulse waveform corresponds to the above-mentioned preprocessing unit 13 and steps S12 and S22.

Next, an example will be described in which abnormal data is detected by conducting principal component analysis using only the normal pulse waveforms or a large number of pulse waveforms, most of which are normal pulse waveforms. In normal welding, it is considered that most of pulse waveforms become normal pulse waveforms while extremely small parts of the pulse waveforms become the abnormal waveforms. The following calculation can be applied without any problem when most of the pulse waveforms are the normal pulse waveforms.

When there are N shaped pulse waveforms (x₁, x₂, ... , x_{N}), one pulse x₁ = [x₁₁, x₂₁, . . . , xₚ₁]^{T} is a p-dimensional vector and, specifically, a vector of about 100 dimensions. That is, when X = [x₁, x₂, . . . , x_{N}] is represented by a matrix, the following equation 1 is given. [Equation 1] $X = \left[{x}_{1}, {x}_{2}, ⋯, {x}_{N}\right] = \left[\begin{matrix}{x}_{11} & {x}_{12} & ⋯ & {x}_{1 N} \\ {x}_{21} & {x}_{22} & ⋯ & {x}_{2 N} \\ ⋮ & ⋮ & ⋱ & ⋮ \\ {x}_{p 1} & {x}_{p 2} & ⋯ & {x}_{pN}\end{matrix}\right]$

Here, the mean µ and standard deviation σ for each row of the matrix are calculated. Each of these calculation results is also a p-dimensional vector. Then, normalization that involves subtracting the mean µ and dividing by the standard deviation σ is performed on each of the N pulse waveforms x₁, x₂, . . . , x_{N} so as to obtain the mean of 0 and the standard deviation of 1.

Thereafter, principal component analysis is conducted to calculate a reconstruction error, thereby obtaining the degree of abnormality of the pulse waveform. Specifically, the degree of abnormality α₁(x') of each shaped pulse waveform x', which is a target for calculation of the degree of abnormality, can be calculated by the following equation 3 on the assumption that u₁, u₂, ... , uₘ are m vectors with the first to m-th highest variances among the obtained principal component vectors as represented by the following equation 2, and Iₚ is the unit matrix of p rows and p columns, by using x~ (i.e., x with a wavy sign added) obtained by subtraction of the mean µ and then division by the standard deviation σ. [Equation 2] ${U}_{m} = \left[{u}_{1},{u}_{2}⋯,{u}_{m}\right]$ [Equation 3] ${α}_{1} \left(x′\right) = {{x}^{˜}}^{T} \left[{I}_{M}-{U}_{m}{{U}_{m}}^{T}\right] {x}^{˜}$

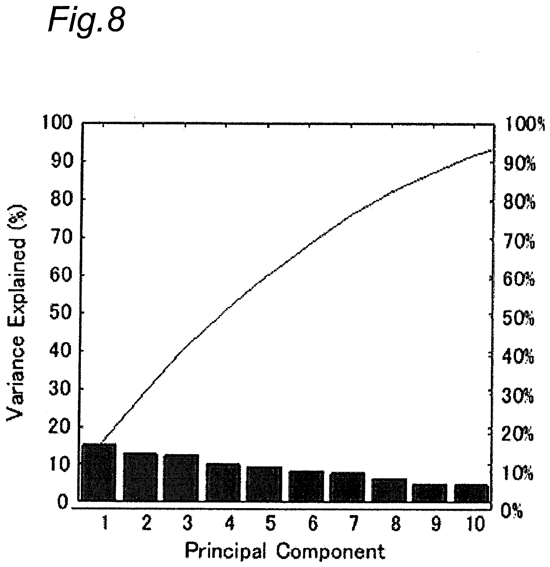

FIG. 8 is a diagram showing a situation in which the variances of the principal components using the shaped pulse waveforms are calculated and then summed from the highest, whereby a cumulative variance exceeds 90% when m=10. By summing the variances in this way, m can be determined.

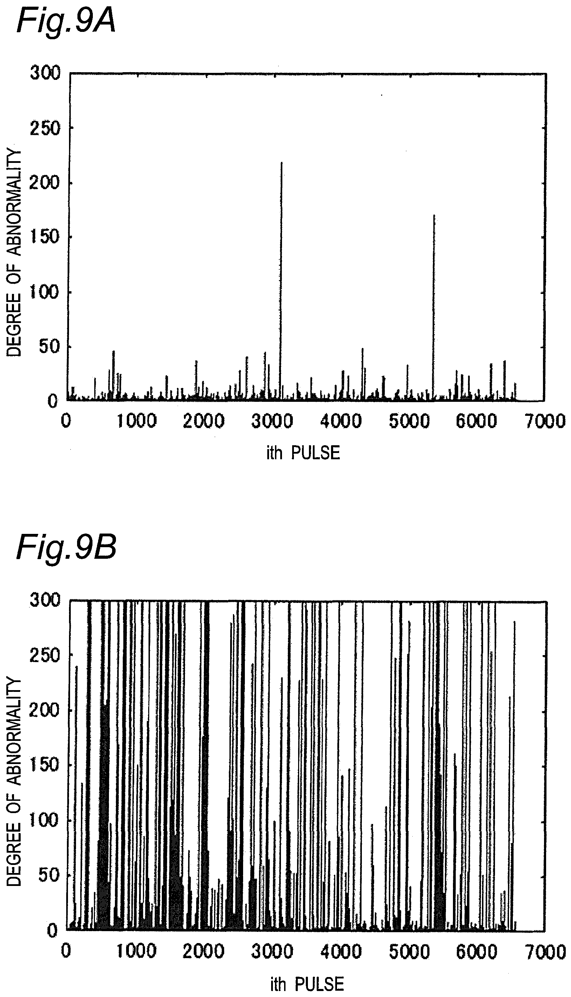

The calculation result of the degree of abnormality of the pulse waveform will be shown below. FIG. 9A is a diagram showing the calculation result of the degree of abnormality of the normal pulse waveform. FIG. 9B is a diagram showing the calculation result of the abnormal pulse waveform that has disturbance in the base portion thereof.

The calculation of the principal component vector by the principal component analysis is an example of the normal pattern creation and corresponds to the normal pattern creation unit 17 and step S14. The calculation of the reconstruction error, that is, the calculation of the degree of abnormality is an example of the welding state determination and corresponds to the welding state determination unit 15 and step S24.

In the way mentioned above, the degrees of abnormality of the abnormal pulse waveforms are calculated, and some of the pulse waveforms with the higher degrees of abnormality are extracted, thus making it possible to detect the abnormality of welding. Although in the above-mentioned example, the normalization process is performed, the calculation of the degree of the abnormality is possible without performing any normalization process.

Even if the pulse waveform is normal, the width or shape of the pulse could vary depending on the set current, the set voltage, and the power source control. However, in the present embodiment, the pulse waveform is scaled and shaped, thus enabling improvement of the detection accuracy of abnormality. That is, even under various welding conditions, the abnormality of welding can be detected because the pulse waveform is scaled and shaped. In addition, since the pulse waveform is scaled and shaped, the abnormality of welding can be detected even under the influence of macro changes in average current, average voltage, or the like, which vary depending on the relational position of a welding torch relative to a workpiece in terms of the height or the lateral position of the welding torch.

Although the principal component analysis can detect the abnormality of welding in the above-mentioned embodiment, the difference from the normal pattern can be clarified by shaping the pulse waveform in the embodiment, and hence it is considered that the abnormality of welding can be detected by various methods as well as the principal component analysis.

For example, only the normal pulse waveforms or a large number of pulse waveforms, most of which are normal pulse waveforms, are shaped. Then, the shaped pulse waveforms are averaged to produce an average pulse waveform, which is referred to as the normal pattern. Subsequently, by calculating a distance between the average pulse waveform and a pulse waveform corresponding to a welding state, which is a target to be determined, the degree of abnormality of the welding state can be calculated. Even though a small number of abnormal pulse waveforms are contained, the influence of these abnormal pulse waveforms can be suppressed by averaging the pulse waveforms. Alternatively, the degree of abnormality of the target pule waveform can be calculated by calculating a Mahalanobis distance between a large number of shaped pulse waveforms and a pulse waveform corresponding to a welding state, which is a target to be determined.

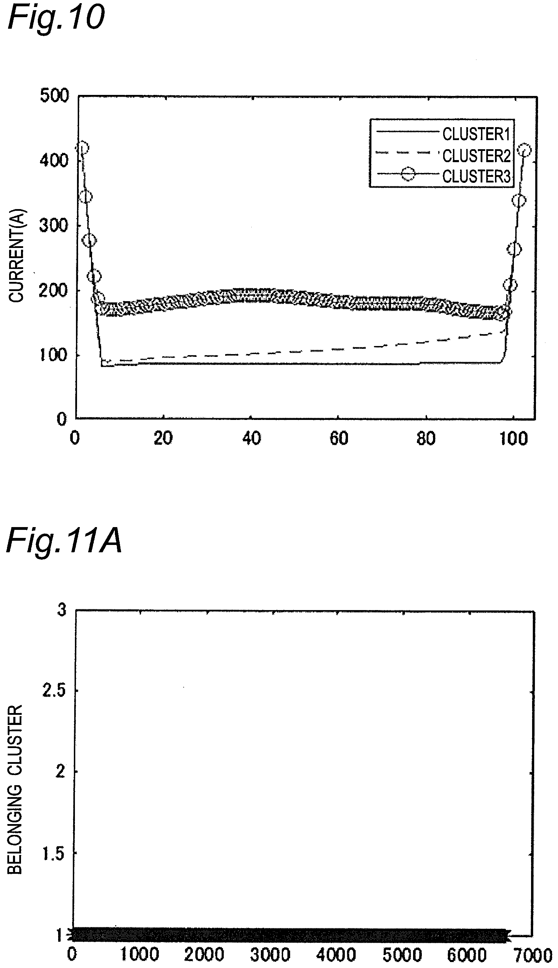

Next, a method of detecting abnormality by performing clustering with k-means after shaping the pulse waveforms will be described. FIG. 10 is a diagram of the results obtained by clustering a combination of normal waveforms and abnormal waveforms into three clusters, in a situation where most of the combined waveforms are the normal pulse waveforms, and then by calculating the center-of-gravity vector of each of the three clusters.

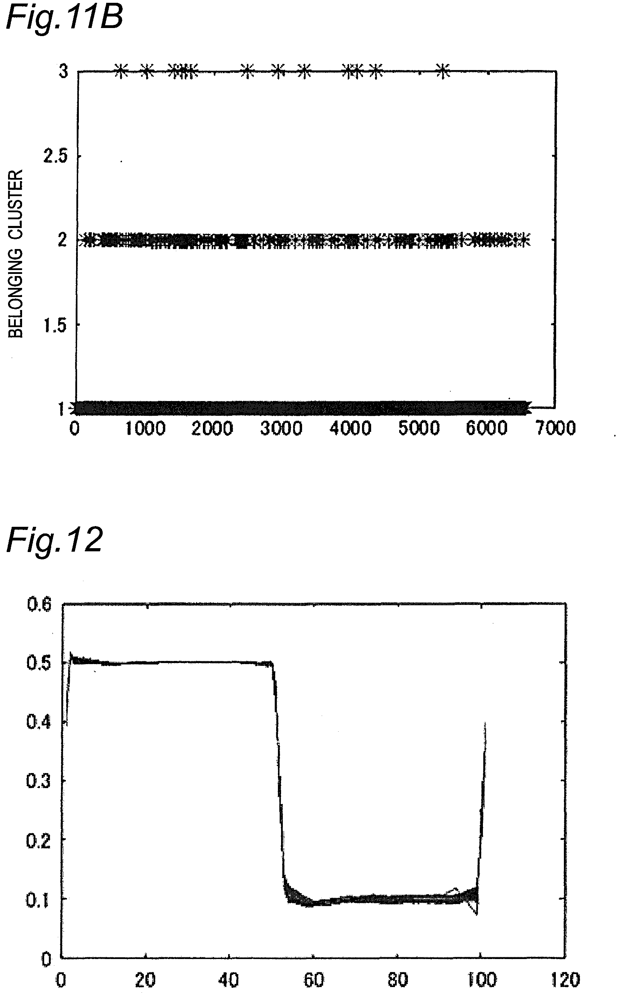

FIG. 11A is a diagram showing to which clusters the normal pulse waveforms belong by calculating a distance from the center-of-gravity in each of the above-mentioned normal pulse waveforms and then determining the cluster closest to the normal pulse waveform. FIG. 11B is a diagram showing to which clusters the abnormal pulse waveforms belong by calculating a distance from the center-of-gravity vector in each of the above-mentioned abnormal pulse waveforms and then determining the cluster closest to the abnormal pulse waveform.

That is, the pulse waveform assigned to the lower level cluster is regarded as the abnormal one, so that the abnormality of welding can be detected. In addition, one-class support vector machine can also be used, and it is needless to say that supervised learning, such as an ordinary support vector machine or a decision tree, can also be applied in the presence of a relatively large amount of abnormal data.

Although the base portion on the lower side of the pulse waveform is focused on in the embodiment mentioned above, the present invention is not limited thereto. For example, the pulse waveform from the rising portion to a next rising portion thereof, that is, the entire pulse waveform including both the peak portions and the base portion thereof may be preprocessed (an example not according to the invention). FIG. 12 shows the result obtained by preprocessing the normal pulse waveform. In addition to preprocessing both the peak portions and the base portions of the pulse waveform to equalize the widths of the peak portion and the base portion, the average current value at each of the peak portions and the base portion is determined, and the scaling process is performed on the pulse waveform such that the level of the peak portion becomes 0.5, whereas the level of the base portion becomes 0.1.

Regarding the scaling for adjusting the levels of the peak portions and the base portion in the manner mentioned above, a scaled value a^(a with ^ thereon) is determined by the following equation 4: [Equation 4] $\hat{a} = 0.1 + 0.4 ∗ \frac{a - {μ}_{B}}{{μ}_{P} - {μ}_{B}}$ where µₚ is an average current value at the peak portion of the pulse waveform, µ_{B} is an average current value thereof at the base portion, and a is a current value at each time.

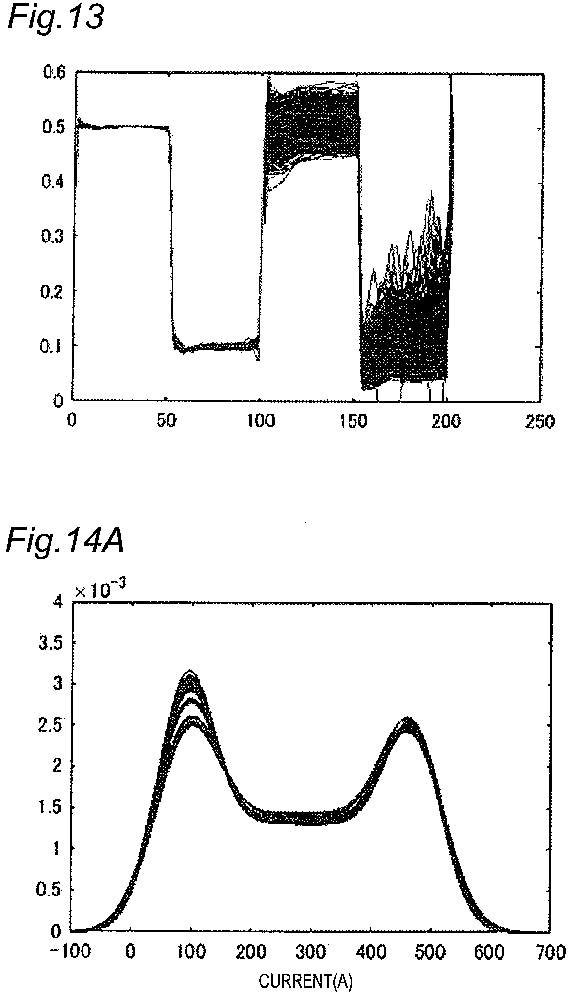

In the above-mentioned embodiment, the preprocessing is performed on the pulse current, but may be on both the pulse current and the pulse voltage. FIG. 13 is a diagram showing the result obtained by preprocessing both the pulse current and the pulse voltage.

The left half part of the diagram shows preprocessed current values of about 100-dimensional vectors, and the right half part thereof shows preprocessed voltage values of about 100-dimensional vectors, which result in about 200-dimensional vectors by simply placing both parts side by side laterally. The voltage value varies due to the influence of weaving and the like. However, variations in the voltage value of such an extent is considered not to be problematic, because the normalization that involves subtracting the mean µ and dividing by the standard deviation σ is performed on the pulse waveforms so as to exhibit a mean of 0 and a standard deviation of 1 in calculating the degree of abnormality of the pulse waveform.

In this way, the preprocessing can be applied not only to the base portion of the pulse waveform, but also to the peak portion thereof. In addition, the preprocessing can be applied not only to the pulse current, but also to a pulse voltage. Here, the pulse voltage may be simply shaped in the same manner as the pulse current mentioned above. However, as the voltage value significantly varies, sample points used for a process of matching the widths of flat portions of the pulse voltage waveforms may be the sample points used for the process of matching the widths of the flat portions of the pulse current waveforms, each sample point having a small absolute value of the gradient of the current value. In this case, which sample point counted from the front is used to shape the pulse current is remembered, and by using such a remembered sample point, the process of matching the widths of the flat portions of the pulse voltage waveforms may be performed.

### [Estimation of Probability Density]

Next, a method of detecting the abnormality will be described which involves extracting an output pattern of a current value by probability density estimation and conducting pattern matching. The probability density estimation is expressed by, for example, equation 5 below. [Equation 5] $f \left(x\right) = \frac{1}{nh} {\sum }_{i = 1}^{n} K \left(\frac{x - {x}_{i}}{h}\right)$ where n is a sample size, K is the kernel smoothing function, and h is a bandwidth.

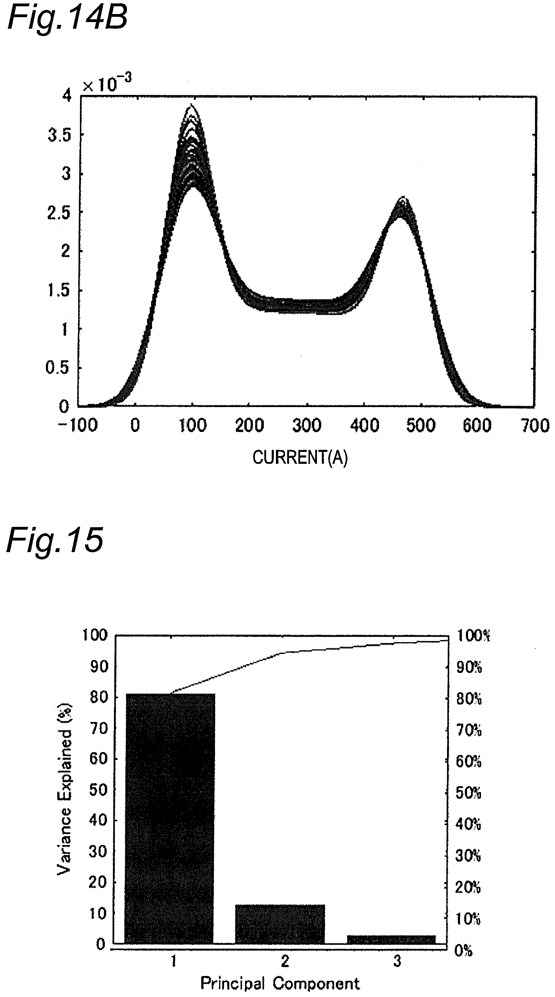

FIG. 14A is a diagram showing a calculation result obtained by performing probability density estimation on the normal pulse current every weaving (that is, a time period during which a weaving electrode moves from one end to the other end of one weaving motion) and then superimposing the estimated results on each other over the plurality of times of weaving. FIG. 14B is a diagram showing a calculation result obtained by performing probability density estimation on the abnormal pulse current with disturbance every weaving and then superimposing the estimated results on each other over the plurality of times of weaving. The probability density estimation is an example of a process executed by an acquisition unit.

It is found that by performing preprocessing of the probability density estimation every weaving, the influence by changes in the current value due to the weaving is equalized, thereby emphasizing the difference between the normal pulse current and the abnormal pulse current.

Then, an example will be described in which the principal component analysis is performed on the pulse waveforms using the results of the probability density estimation, thereby detecting abnormal data. FIG. 15 is a diagram showing a situation in which the variances of the principal components using the results of the probability density estimation are calculated and then summed from the highest, whereby a cumulative variance exceeds 90% when m=2. By summing the variances in this way, m can be determined.

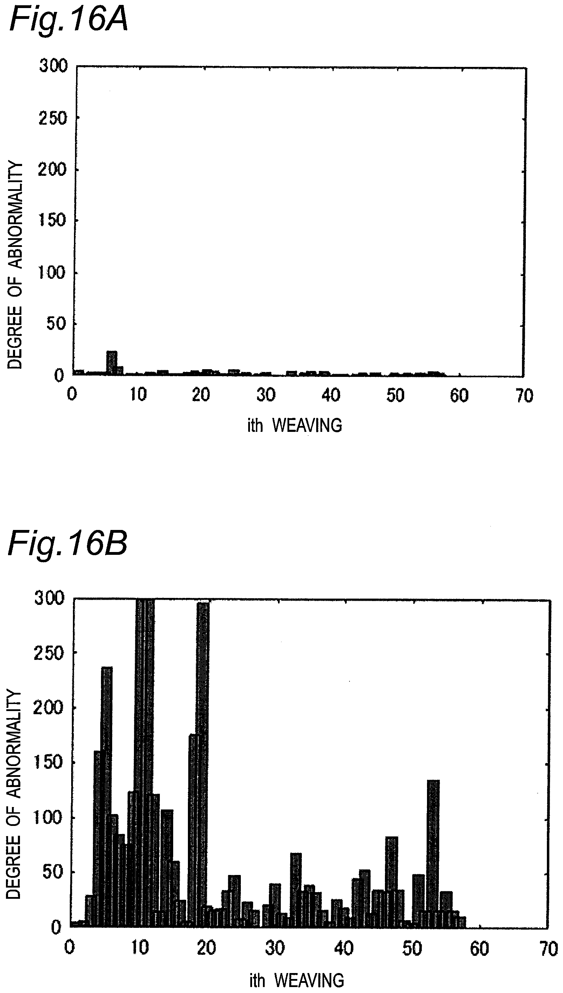

The calculation result of the degree of abnormality of the pulse waveform will be shown below. FIG. 16A is a diagram showing the calculation result of the degree of abnormality of the normal pulse current. FIG. 16B is a diagram showing the calculation result of the degree of abnormality of the abnormal pulse current where disturbance occurs.

As mentioned above, the degrees of abnormality of these pulse currents are calculated, and some of the pulse currents with the higher degrees of abnormality are extracted, thus making it possible to detect the abnormality of welding. The calculation of the principal component vector by the principal component analysis is an example of a process executed by a creation unit, and the calculation of a reconstruction error, i.e., the calculation of the degree of abnormality is an example of a process executed by a determination unit.

Since the probability density is calculated in a cycle including one weaving, a set of changes in the current or voltage during one weaving can be obtained even when the relative position between the welding torch and a workpiece changes due to the weaving. In this way, it is considered that the probability density pattern of the pulse waveform can be stably acquired. That is, as the pulse waveform is scaled and shaped, the abnormality of welding can be detected even in a situation where the relative position between the welding torch and the workpiece changes due to the weaving.

### [Sample Point Extraction]

Next, a method of detecting the abnormality will be described which involves extracting output patterns of current values by setting the same corresponding points of the base portions of the respective pulses as a sample point and then by conducting pattern matching, in a set of repeated pulse waveforms of the pulse current.

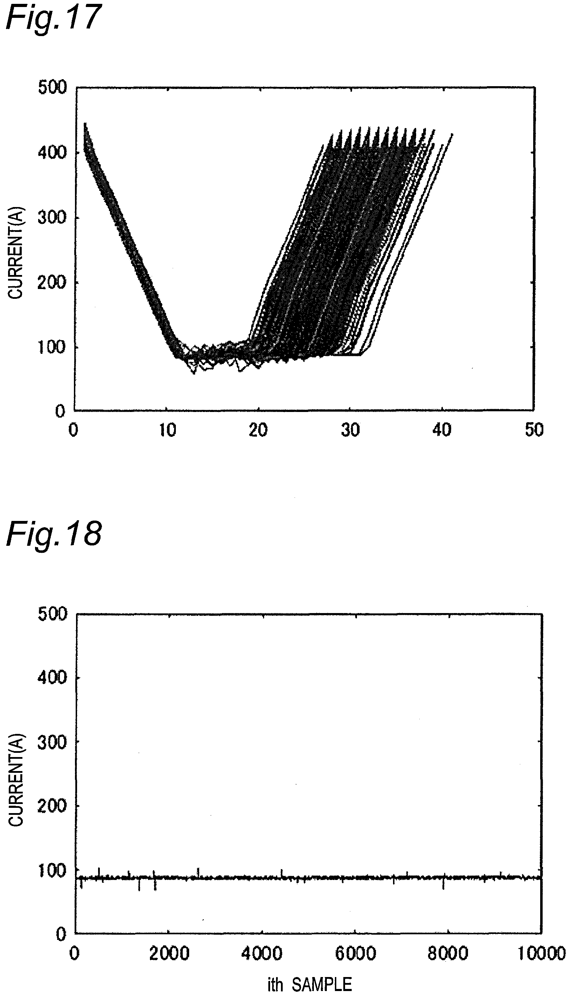

FIG. 17 is a diagram showing the result obtained by, for example, cutting out the normal pulse waveform into a plurality of pulses, each pulse being present within a range from its rising portion with approximately 400 A to a next rising portion with approximately 400 A, and then by superimposing the plurality of pulses on each other.

Here, the point near the center of the base portion is proposed to be sampled. FIG. 18 is a diagram showing the result obtained by extracting the fifth point measured from the head of each pulse shown in FIG. 17 mentioned above, and then arranging these sample points of approximately 10,000 pulses. The extraction of the sample points is an example of the process executed by the acquisition unit.

Here, the degree of abnormality of a newly obtained sample point x' is represented by the following equation 6: [Equation 6] $α \left(x′\right) = {\left(\frac{x ′ - μ}{σ}\right)}^{2}$ where x₁, x₂, · · · , x_{N} are sample points, µ is the mean thereof, and σ is the standard deviation thereof.

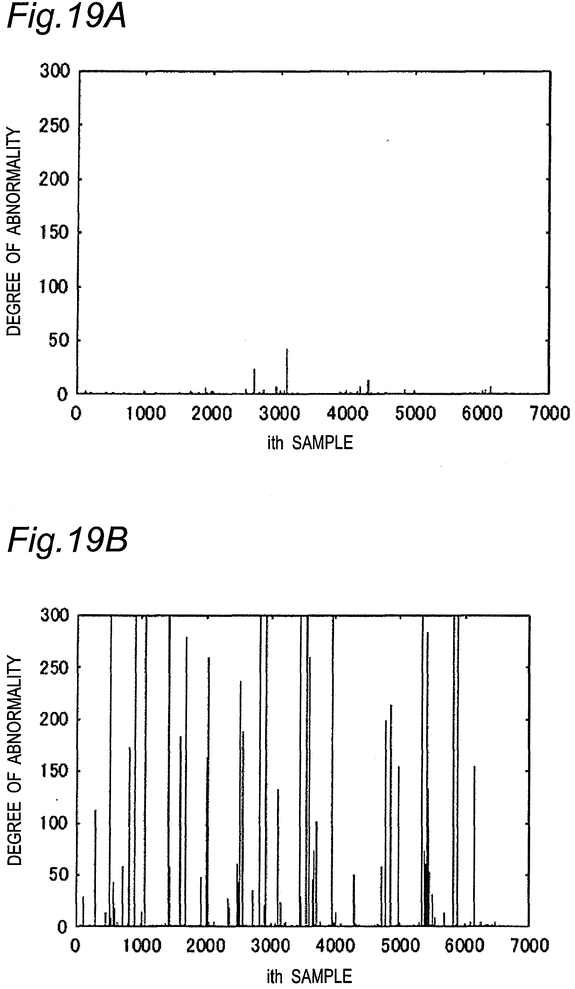

The calculation result of the degree of abnormality will be shown. FIG. 19A is a diagram showing the calculation result of the degree of abnormality regarding the extracted point of the normal pulse waveform. FIG. 19B is a diagram showing the calculation result of the degree of abnormality regarding the extracted point of the abnormal pulse waveform where disturbance occurs.

As mentioned above, by using one point for each pulse, the abnormality of welding can be detected while suppressing the process time. The extraction of the sample point is an example of the process executed by a creation unit, and the calculation of the degree of abnormality is an example of the process executed by the determination unit. Although only one point is extracted from each pulse in the embodiment, a plurality of points may be extracted therefrom. The embodiment is not limited to the pulse current and may be applied to a pulse voltage.

Provided is a welding state determination device that can easily determine the welding state within the scope of the appended claims.

## Claims

1. A welding state determination device (1), comprising:
an acquisition unit (11) that is configured to acquire a pulse waveform of a pulse current or a pulse voltage supplied to an electrode (85) for pulse arc welding;
**characterized by** comprising
a preprocessing unit (13) that is configured to
cut out the pulse waveform into units, each unit including a falling portion, a rising portion, and a flat portion therebetween, wherein the flat portion is a base portion or a peak portion, and
shape the pulse waveform such that the flat portion has a predetermined width;
a normal pattern creation unit (17) configured to create a normal pattern based on a plurality of past shaped pulse waveforms; and
a determination unit (15) that is configured to determine a state of the pulse arc welding based on a distance between the shaped pulse waveform having the flat portion with the predetermined width and the normal pattern,
wherein the normal pattern is created by averaging the plurality of past shaped pulse waveforms;
and wherein the pulse waveform is shaped such that the flat portion thereof has substantially the same width as the flat portion in the normal pattern.

2. The welding state determination device (1) according to claim 1, wherein the preprocessing unit (13) is configured to widen a width of a portion having a gradient that is equal to or less than a predetermined value, among a plurality of portions included in the pulse waveform.

3. A welding state determination method, comprising:
acquiring (S11, S21) a pulse waveform of a pulse current or a pulse voltage supplied to an electrode (85) for pulse arc welding;
**characterized by** comprising
cutting out the pulse waveform into units, each unit including a falling portion, a rising portion, and a flat portion therebetween, wherein the flat portion is a base portion or a peak portion;
shaping (S12, S22) the pulse waveform such that the flat portion has a predetermined width; and
determining (S24) a state of the pulse arc welding based on a distance between the shaped pulse waveform having the flat portion with the predetermined width and a normal pattern created based on a plurality of past shaped pulse waveforms,
wherein the normal pattern is created by averaging the plurality of past shaped pulse waveforms;
and wherein the pulse waveform is shaped such that the flat portion thereof has substantially the same width as the flat portion in the normal pattern.

4. A program for a computer comprising instructions, which cause the welding state determination device (1) according to any one of claims 1 or 2 to execute the welding state determination method according to claim 3.

## Patentansprüche

1. Schweißzustandsbestimmungsvorrichtung (1), mit:
einer Beschaffungseinheit (11), die konfiguriert ist, um eine Pulswellenform eines Pulsstroms oder einer Pulsspannung zu beschaffen, der beziehungsweise die einer Elektrode (85) zum Pulslichtbogenschweißen zugeführt wird;
**dadurch gekennzeichnet, dass** diese aufweist
eine Vorverarbeitungseinheit (13), die konfiguriert ist, um
die Pulswellenform in Einheiten auszuschneiden, wobei jede Einheit einen abfallenden Abschnitt, einen ansteigenden Abschnitt und einen dazwischenliegenden flachen Abschnitt umfasst, wobei der flache Abschnitt ein Basisabschnitt oder ein Spitzenabschnitt ist, und
die Pulswellenform derart zu formen, dass der flache Abschnitt eine vorbestimmte Breite aufweist;
eine Normalmustererzeugungseinheit (17), die konfiguriert ist, um ein Normalmuster basierend auf einer Vielzahl früherer geformter Pulswellenformen zu erzeugen; und
eine Bestimmungseinheit (15), die konfiguriert ist, um einen Zustand des Pulslichtbogenschweißens basierend auf einem Abstand zwischen der geformten Pulswellenform, die den flachen Abschnitt mit der vorbestimmten Breite aufweist, und dem Normalmuster zu bestimmen,
wobei das Normalmuster durch Mitteln der Vielzahl früherer geformter Pulswellenformen erzeugt wird;
und wobei die Pulswellenform derart geformt wird, dass deren flacher Abschnitt im Wesentlichen dieselbe Breite wie der flache Abschnitt in dem Normalmuster aufweist.

2. Schweißzustandsbestimmungsvorrichtung (1) gemäß Anspruch 1, wobei die Vorverarbeitungseinheit (13) konfiguriert ist, um eine Breite eines Abschnitts zu verbreitern, der einen Gradienten aufweist, der gleich oder kleiner als ein vorbestimmter Wert ist, unter einer Vielzahl von Abschnitten, die in der Pulswellenform umfasst sind.

3. Schweißzustandsbestimmungsverfahren, mit:
Beschaffen (S11, S21) einer Pulswellenform eines Pulsstroms oder einer Pulsspannung, der beziehungsweise die einer Elektrode (85) zum Pulslichtbogenschweißen zugeführt wird;
**dadurch gekennzeichnet, dass** dieses aufweist
Ausschneiden der Pulswellenform in Einheiten, wobei jede Einheit einen abfallenden Abschnitt, einen ansteigenden Abschnitt und einen dazwischenliegenden flachen Abschnitt umfasst, wobei der flache Abschnitt ein Basisabschnitt oder ein Spitzenabschnitt ist;
Formen (S12, S22) der Pulswellenform derart, dass der flache Abschnitt eine vorbestimmte Breite aufweist; und
Bestimmen (S24) eines Zustands des Pulslichtbogenschweißens basierend auf einem Abstand zwischen der geformten Pulswellenform, die den flachen Abschnitt mit der vorbestimmten Breite aufweist, und einem Normalmuster, das basierend auf einer Vielzahl früherer geformter Pulswellenformen erzeugt wird,
wobei das Normalmuster durch Mitteln der Vielzahl früherer geformter Pulswellenformen erzeugt wird;
und wobei die Pulswellenform derart geformt wird, dass deren flacher Abschnitt im Wesentlichen dieselbe Breite wie der flache Abschnitt in dem Normalmuster aufweist.

4. Programm für einen Computer, das Anweisungen aufweist, die die Schweißzustandsbestimmungsvorrichtung (1) gemäß einem der Ansprüche 1 oder 2 veranlassen, das Schweißzustandsbestimmungsverfahren gemäß Anspruch 3 auszuführen.

## Revendications

1. Dispositif (1) de détermination d'un état de soudage, comprenant :
une unité d'acquisition (11) configurée pour acquérir une forme d'onde pulsée d'un courant pulsé ou d'une tension pulsée fournis à une électrode (85) pour un soudage à l'arc pulsé ;
**caractérisé en ce qu'**il comprend
une unité de prétraitement (13) configurée pour
découper la forme d'onde pulsée en unités, chaque unité comportant une partie descendante, une partie montante et une partie plate entre celles-ci, la partie plate étant une partie de base ou une partie de crête, et
mettre en forme la forme d'onde pulsée de sorte que la partie plate présente une largeur prédéterminée ;
une unité de création de motif normal (17) configurée pour créer un motif normal sur la base d'une pluralité de formes d'onde pulsées mises en forme antérieures ; et
une unité de détermination (15) configurée pour déterminer un état du soudage à l'arc pulsé sur la base d'une distance entre la forme d'onde pulsée mise en forme présentant la partie plate ayant la largeur prédéterminée et le motif normal,
dans lequel le motif normal est créé par moyennage de la pluralité de formes d'onde pulsées mises en forme antérieures ;
et dans lequel la forme d'onde pulsée est mise en forme de sorte que sa partie plate présente sensiblement la même largeur que la partie plate dans le motif normal.

2. Dispositif (1) de détermination d'un état de soudage selon la revendication 1, dans lequel l'unité de prétraitement (13) est configurée pour augmenter la largeur d'une partie présentant un gradient inférieur ou égal à une valeur prédéterminée, parmi une pluralité de parties comprises dans la forme d'onde pulsée.

3. Procédé de détermination d'un état de soudage, comprenant :
l'acquisition (S11, S21) d'une forme d'onde pulsée d'un courant pulsé ou d'une tension pulsée fournis à une électrode (85) pour un soudage à l'arc pulsé ;
**caractérisé en ce qu'**il comprend
le découpage de la forme d'onde pulsée en unités, chaque unité comportant une partie descendante, une partie montante et une partie plate entre celles-ci, la partie plate étant une partie de base ou une partie de crête ;
la mise en forme (S12, S22) de la forme d'onde pulsée de sorte que la partie plate présente une largeur prédéterminée ; et
la détermination (S24) d'un état du soudage à l'arc pulsé sur la base d'une distance entre la forme d'onde pulsée mise en forme présentant la partie plate ayant la largeur prédéterminée et un motif normal créé sur la base d'une pluralité de formes d'onde pulsées mises en forme antérieures,
dans lequel le motif normal est créé par moyennage de la pluralité de formes d'onde pulsées mises en forme antérieures ;
et dans lequel la forme d'onde pulsée est mise en forme de sorte que sa partie plate présente sensiblement la même largeur que la partie plate dans le motif normal.

4. Programme destiné à un ordinateur, comprenant des instructions qui amènent le dispositif (1) de détermination d'un état de soudage selon l'une quelconque des revendications 1 ou 2 à exécuter le procédé de détermination d'un état de soudage selon la revendication 3.
